(19)  Europäisches Patentamt

European Patent Office

Office européen des brevets

(11) **EP 3 922 494 B1**

(12) **FASCICULE DE BREVET EUROPEEN**

(45) Date de publication et mention de la délivrance du brevet:
**05.04.2023  Bulletin 2023/14**

(21) Numéro de dépôt: **20305619.7**

(22) Date de dépôt: **09.06.2020**

(51) Classification Internationale des Brevets (IPC):
***B60H 1/00*** *(2006.01)*

(52) Classification Coopérative des Brevets (CPC):
**B60H 1/00564**

(54) **TUYAU DE DISTRIBUTION D'AIR POUR UN CIRCUIT CVC D'UN VEHICULE**

LUFTVERTEILUNGSSCHLAUCH FÜR EINEN HVAC-KREISLAUF EINES FAHRZEUGS

AIR DISTRIBUTION PIPE FOR AN HVAC CIRCUIT OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**15.12.2021  Bulletin 2021/50**

(73) Titulaires:
- **Industrias Tecnicas de la Espuma SL**
  **01220 Armiñón (ES)**
- **HUTCHINSON**
  **75008 Paris (FR)**

(72) Inventeurs:
- **GUTIERREZ ROSADO, Jorge**
  **01220 Armiñón (ES)**

- **NAVARRO BERMEJO, David**
  **01220 Armiñón (ES)**
- **TANNEAU, Olivier**
  **93400 Saint-Ouen (FR)**
- **DÍAZ DE DURANA BAHON, Julio**
  **01220 Armiñón (ES)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
**WO-A1-2008/000788     DE-A1- 3 536 379**
**FR-A1- 2 876 172       JP-A- 2004 116 959**

## Description

## Domaine technique de l'invention

La présente invention concerne un tuyau de distribution d'air pour un circuit de chauffage, ventilation et climatisation d'un véhicule par exemple automobile. Ce circuit est connu sous le nom de circuit CVC (acronyme de chauffage, ventilation et climatisation) et plus particulièrement de circuit HVAC (acronyme de l'anglais *heating, ventilation and air-conditioning*).

## Arrière-plan technique

L'arrière-plan technique comprend notamment les documents JP-A-2004 116959, WO-A1-2008/000788, DE-A1-3536379 et FR-A1-2 876 172.

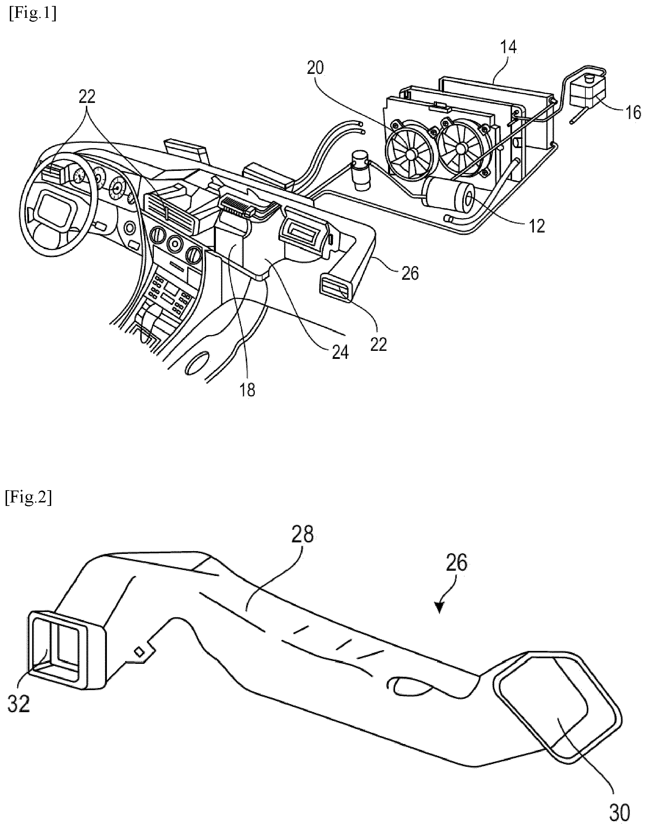

Un circuit CVC ou HVAC est schématiquement représenté à la figure 1. Ce type de circuit 10 comprend en général un compresseur 12, un condenseur 14, un détendeur 16 et un évaporateur 18.

Un fluide réfrigérant (tel que le R1234yf) passe tout d'abord par le compresseur 12 afin de ressortir à l'état gazeux à haute pression. Le condenseur 14 permet de faire passer ce fluide de l'état gazeux à l'état liquide. C'est durant cette étape que le fluide cède son énergie thermique, avant de traverser le détendeur 16.

Le détendeur 16 permet de faire chuter la pression du fluide et par conséquent sa température. Il permet également de réguler le débit du fluide dans le circuit 10. L'évaporateur 18 est placé sous la planche de bord du véhicule et a deux fonctions : refroidir l'air entrant dans l'habitacle et assécher cet air. Un ventilateur 20 fait passer de l'air extérieur à travers l'évaporateur 18. Cet air perd de sa chaleur et de son humidité, avant d'être rediffusé dans l'habitacle à travers un filtre et des grilles de ventilation 22, créant une sensation de fraîcheur. L'évaporateur 18 est situé dans une unité 24 de refroidissement et de chauffage qui comprend un corps de chauffe dans le cas où l'air devrait au contraire être réchauffé pour chauffer l'habitable du véhicule. L'air est amené de l'unité 24 vers les grilles 22 par des tuyaux 26 de distribution d'air dont un est schématiquement représenté à la figure 2.

Un tuyau de distribution 26 peut avoir une forme complexe pour contourner certains obstacles de son environnement de montage. Il a une forme générale allongée et comprend un corps tubulaire 28 comportant une ouverture 30 d'entrée d'air à une extrémité et au moins une ouverture 32 de sortie d'air à son extrémité opposée. Le tuyau peut avoir en section une forme non circulaire.

Le tuyau 32 peut être réalisé dans un matériau cellulaire (ou alvéolaire, appelé couramment *foam material* en anglais) et élastiquement déformable. Dans la présente demande, on entend par matériau cellulaire, un matériau qui comprend des cellules ou cavités ouvertes et fermées de faible taille qui permettent d'alléger et d'assouplir le matériau. Le matériau est élastiquement déformable, c'est-à-dire qu'il est souple et peut récupérer sa forme initiale après avoir été déformé.

Dans le but d'améliorer constamment les conditions de transport du conducteur et des passagers du véhicule, il est important de diminuer au maximum les nuisances sonores du moteur et des équipements du véhicule. Dans ce contexte, la demanderesse a cherché une solution d'amélioration d'un tuyau de distribution d'air d'un circuit CVC, afin d'atténuer le bruit transmis à l'habitable du véhicule et provenant notamment du ventilateur et du compresseur de ce circuit.

## Résumé de l'invention

L'invention propose une solution simple, efficace et économique pour atténuer le bruit transmis par un tuyau de distribution d'air pour un circuit CVC d'un véhicule.

La présente invention concerne un tuyau de distribution d'air pour un circuit CVC d'un véhicule, ce tuyau comportant une unique paroi tubulaire monocouche réalisée à partir d'un matériau cellulaire et élastiquement déformable, caractérisé en ce que ladite paroi comprend des microperforations d'atténuation acoustique, ces microperforations s'étendant depuis au moins une des surfaces interne et externe de la paroi en direction de l'autre de ces surfaces, voire jusqu'à l'autre de ces surfaces.

Il est tout d'abord important de noter que le tuyau comprend une unique paroi tubulaire et monocouche. Le tuyau est donc simple à réaliser au contraire de tuyaux de la technique antérieure qui peuvent présenter plusieurs couches ou parois superposées. La paroi du tuyau selon l'invention est formée à partir du matériau cellulaire et élastiquement déformable évoqué dans ce qui précède.

Le fait que le tuyau ait une seule couche ou paroi est avantageux pour élargir la plage de fréquences d'atténuation acoustique, en particulier vers les basses fréquences. En effet, un tuyau multicouche de la technique antérieure a en général une propriété d'atténuation acoustique à des moyennes et hautes fréquences (typiquement supérieures à 800Hz). Le tuyau selon l'invention peut au contraire avoir une propriété d'atténuation acoustique plus élargie y compris à des basses fréquences (typiquement jusqu'à 50Hz).

Le tuyau selon l'invention peut avoir n'importe quelle forme, en particulier en section.

Selon l'invention, le tuyau est microperforé, les microperforations étant réalisées depuis l'intérieur et/ou l'extérieur du tuyau et étant traversantes ou non traversantes. Une première remarque est que les microperforations s'étendent donc sensiblement radialement (par rapport à l'axe longitudinal ou d'allongement du tuyau) sur toute ou partie de l'étendue ou de l'épaisseur du tuyau, c'est-à-dire sur toute ou partie de l'épaisseur de sa paroi. Ce premier point est important et va à l'encontre de ce qu'un homme du métier envisagerait pour améliorer les propriétés acoustiques du tuyau. En effet, le tuyau ayant pour fonction de distribuer de l'air, il ne viendrait pas à l'idée d'un homme du métier de percer la paroi unique de ce tuyau au risque de générer des fuites d'air.

Compte tenu des pressions et des débits d'air d'un circuit CVC, les microperforations du tuyau sont configurées pour limiter ou empêcher ces fuites. Elles ont donc de préférence une taille très petite. Lorsque les microperforations sont non traversantes, on comprend que la section de passage de leurs extrémités radialement internes est nulle. Lorsque les microperforations sont traversantes, leurs extrémités radialement internes, situées donc vers l'intérieur du tuyau, ont une section de passage qui peut être nulle (du fait du retour élastique de la matière après réalisation des microperforations) ou non nulle mais qui est suffisamment petite pour garantir une étanchéité suffisante du tuyau en utilisation. Les microperforations peuvent avoir des sections de passage qui se rétrécissent radialement vers l'intérieur du tuyau. Les microperforations ont alors dans ce cas une forme tronconique évasée vers l'extérieur.

Les microperforations peuvent être visibles à l'oeil nu sur la surface externe du tuyau. A contrario, la taille de la section de passage des extrémités radialement internes des microperforations peut être telle qu'il n'est pas possible de constater à l'oeil nu que les microperforations débouchent ou non à l'intérieur du tuyau. Autrement dit, même si une source de lumière est disposée à l'intérieur du tuyau, il peut ne pas être possible de voir à l'oeil nu cette lumière à travers les microperforations du fait de la taille resserrée des microperforations au niveau de leurs extrémités radialement internes. Comme cela sera évoqué dans ce qui suit, les microperforations peuvent être réalisées par poinçonnage mécanique ou perçage par exemple depuis l'extérieur du tuyau. Le poinçonnage mécanique est une opération pendant laquelle un ou plusieurs poinçons (en forme de pointe effilée par exemple) sont engagés dans un matériau pour le percer. Du fait des propriétés élastiques du matériau du tube, les microperforations réalisées par poinçonnage ont tendance à se refermer après retrait des poinçons, ce qui permet aux extrémités internes des microperforations d'avoir une section de passage réduite.

En variante, les microperforations pourraient être réalisées par perçage laser ou autre technique appropriée.

La taille des microperforations peut être mesurée à l'état libre sans contrainte du tuyau. Naturellement, du fait des propriétés élastiques du matériau, une traction sur le tuyau le déforme et peut entrainer une augmentation de cette taille. Toutefois, en fonctionnement, le tuyau est monté ajusté dans son environnement et ne doit pas être contraint. Autrement dit, la taille des microperforations du tuyau ne doit pas varier avant et après montage dans un véhicule.

Des tests d'atténuation acoustique ont été réalisés et ont démontré qu'un tuyau selon l'invention peut avoir des gains supplémentaires à des basses fréquences, typiquement entre 50 et 800Hz. L'atténuation acoustique améliorée du tuyau selon l'invention est liée à l'effet d'absorption du bruit par la paroi du tuyau. En effet, les valeurs d'absorption mesurées montrent une bonne corrélation entre absorption de paroi et atténuation acoustique. L'absorption basse fréquence d'un tuyau multiperforé augmente principalement par un effet dissipatif dans l'épaisseur de paroi. Une transmission au travers de la paroi est également augmentée mais de manière secondaire.

Le tuyau selon l'invention peut comprendre une ou plusieurs des caractéristiques suivantes, prises isolément les unes des autres ou en combinaison les unes avec les autres :

-- les microperforations s'étendent depuis la surface externe en direction de ou jusqu'à la surface interne,
-- les microperforations s'étendent depuis la surface interne en direction de ou jusqu'à la surface externe,

- les microperforations s'étendent sur une partie seulement de l'épaisseur de la paroi ;
- les microperforations s'étendent sur toute l'épaisseur de la paroi et débouchent sur les surfaces interne et externe du tuyau ;
- les microperforations comportent des extrémités radialement internes qui ont une section de passage inférieure à celle des extrémités radialement externes des microperforations ;
- les extrémités radialement internes des microperforations ont chacune une section de passage inférieure ou égale à 1,5mm$^2$, de préférence inférieure ou égale à 1mm$^2$, et plus préférentiellement inférieure ou égale à 0,5mm$^2$, lorsque le tuyau est à l'état libre sans contrainte ;
- la paroi comprend une portion multiperforée ayant un taux de perforation supérieur à 5% ; dans la présente demande, on entend par « taux de perforation », le rapport des surfaces cumulées des microperforations sur la surface de la portion de la paroi considérée ; ces surfaces cumulées sont ici les sections de passage des microperforations en particulier de leurs extrémités radialement externes ;

-- la paroi comprend au moins cinq microperforations par cm$^2$ ;

- les extrémités radialement externes des microperforations ont un diamètre compris entre 0,2 et 3mm, de préférence entre 0,3 et 2,5mm, plus préférentiellement entre 0,5 et 2mm, et encore plus préférentiellement entre 0,8 et 1,2mm ;
- les microperforations sont configurées pour conférer au tuyau une atténuation acoustique comprise entre 5 et 15db, et par exemple d'environ 10dB, à des fréquences inférieures à 1000Hz, et par exemple comprises entre 50 et 800Hz ;

- le matériau cellulaire a une densité comprise entre 30 et 300kg/m³, de préférence entre 40 et 200kg/m³, et plus préférentiellement entre 50 et 130 kg/m³ ;
- la paroi a une épaisseur comprise entre 1 et 10mm, de préférence entre 2 et 8mm, et plus préférentiellement entre 3 et 6mm ;
- les cellules du matériau ont une taille comprise entre 0,1 et 3mm, de préférence entre 0,2 et 2mm, et plus préférentiellement entre 0,3 et 1,1mm ;
- le matériau est à base d'un élastomère thermoplastique ;
- le matériau est une polyoléfine, tel que du polyéthylène ou du polypropylène ;
- la paroi comprend au moins une portion comportant des microperforations et au moins une portion dépourvue de microperforations ;

-- le tuyau a un diamètre moyen compris entre 20 et 250mm environ, de préférence entre 40 et 80mm, et plus préférentiellement entre 50 et 70mm ;
-- le tuyau a une longueur comprise entre 100 et 1500mm, de préférence entre 200 et 800mm, et plus préférentiellement entre 500 et 700mm.

La présente invention concerne également un circuit CVC d'un véhicule, comportant au moins un tuyau tel que décrit ci-dessus, par exemple juste en amont d'une grille de ventilation.

La présente invention concerne encore un procédé de fabrication d'un tuyau tel que décrit ci-dessus, comprenant les étapes consistant à :

a) réaliser la paroi tubulaire monocouche à partir d'un matériau cellulaire et élastiquement déformable, et

b) réaliser les microperforations dans la paroi par poinçonnage mécanique de la paroi radialement depuis l'extérieur du tuyau, ou par perçage laser de la paroi.

Avantageusement, la paroi est réalisée à l'étape a) par :

a1) disposition de deux feuilles de matériau cellulaire et élastiquement déformable dans un moule de chauffage et de soufflage, les feuilles étant superposées,

a2) chauffage des feuilles dans le moule et injection d'air entre les feuilles dans le moule de façon à former une préforme tubulaire, et a3) réalisation de la paroi tubulaire à partir de la préforme tubulaire.

En variante, la paroi est réalisée à l'étape a) par :

A1) extrusion d'une paraison et positionnement de la paraison dans un moule,

A2) injection d'air dans la paraison de façon à former une préforme tubulaire, et

A3) réalisation de la paroi tubulaire à partir de la préforme tubulaire.

**Brève description des figures**

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :

[Fig.1] la figure 1 est une vue schématique en perspective d'un circuit CVC ou HVAC d'un véhicule, en particulier automobile ;

[Fig.2] la figure 2 est une vue schématique en perspective d'un tuyau de distribution d'air pour un circuit du type de celui de la figure 1, selon la technique antérieure ;

[Fig.3] la figure 3 est une vue schématique en perspective d'un tuyau de distribution d'air pour un circuit du type de celui de la figure 1, selon un mode de réalisation de l'invention ;

[Fig.4] la figure 4 est une vue à plus grande échelle d'une partie du tuyau de la figure 3 ;

[Fig.5] la figure 5 est une vue très schématique en coupe d'un tuyau selon un mode de réalisation de l'invention ;

[Fig.6] la figure 6 est une vue très schématique en coupe d'un tuyau selon une variante de réalisation de l'invention ;

[Fig7] la figure 7 est une vue très schématique d'une microperforation d'un tuyau selon un mode de réalisation de l'invention ;

[Fig.8a] la figure 8a comprend des vues schématiques en coupe d'un moule de fabrication d'un tuyau selon l'invention à partir de deux feuilles, et représentent des étapes d'un procédé de fabrication du tuyau ;

[Fig.8b] la figure 8b comprend des vues schématiques en coupe d'un moule de fabrication d'un tuyau selon l'invention par extrusion-soufflage, et représentent des étapes d'un procédé de fabrication du tuyau ;

[Fig.9] la figure 9 est une vue schématique en coupe d'un outil de poinçonnage d'un tuyau selon l'invention et représente une étape d'un procédé de fabrication du tuyau ;

[Fig.10] la figure 10 est un graphe montrant l'évolution de l'atténuation acoustique en dB (appelée « perte par insertion ») d'un tuyau en fonction de la fréquence d'une émission sonore, et montre deux courbes, respectivement une courbe pour un cas idéal et une courbe pour un tuyau de la technique antérieure ;

[Fig. 11] la figure 11 est un graphe similaire à celui de la figure 10 et montrant notamment une courbe pour un tuyau selon l'invention ; et

[Fig. 12] la figure 12 est une vue très schématique d'une paroi et illustre un phénomène d'atténuation acoustique par absorption.

**Description détaillée de l'invention**

Les figures 1 et 2 ont été décrites dans ce qui précède.

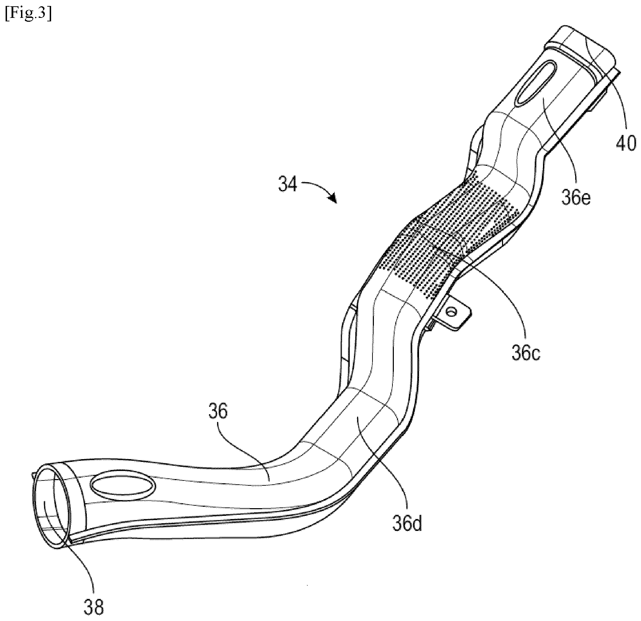

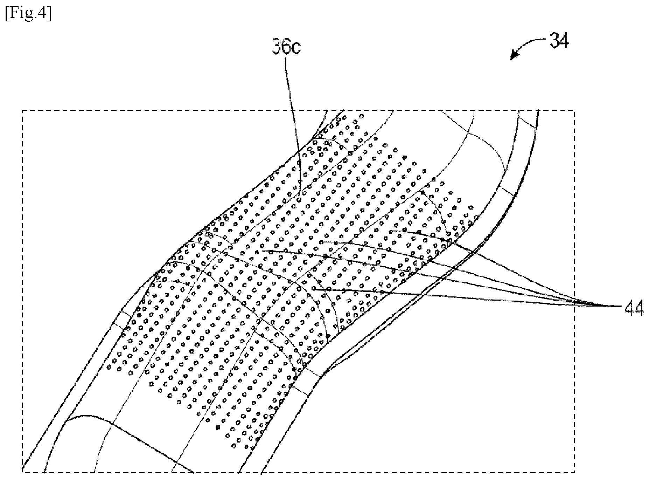

Les figures 3 et 4 illustrent un mode de réalisation d'un tuyau 34 de distribution d'air pour un circuit CVC ou HVAC d'un véhicule, par exemple automobile.

Le tuyau 34 a une forme générale allongée et comprend une unique paroi 36 tubulaire et monocouche qui est réalisée à partir d'un matériau cellulaire et élastiquement déformable tel qu'un élastomère thermoplastique (PP, PE, etc.).

A titre d'exemple, le tuyau a un diamètre moyen compris entre 20 et 250mm environ, de préférence entre 40 et 80mm, plus préférentiellement entre 50 et 70mm. Le tuyau a par exemple une longueur comprise entre 100 et 1500mm, de préférence entre 200 et 800mm, et plus préférentiellement entre 500 et 700mm.

Le tuyau 34 comprend une ouverture de passage d'air à chacune de ses extrémités longitudinales. La première ouverture 38 est par exemple une ouverture d'entrée d'air et la seconde ouverture 40 est par exemple une ouverture de sortie d'air. Les sections de passage du tuyau 34 et de ses ouvertures 38, 40 ne sont pas forcément circulaires, comme dans l'exemple représenté. En variante, le tuyau pourrait comprendre deux ou plus ouvertures de sortie d'air.

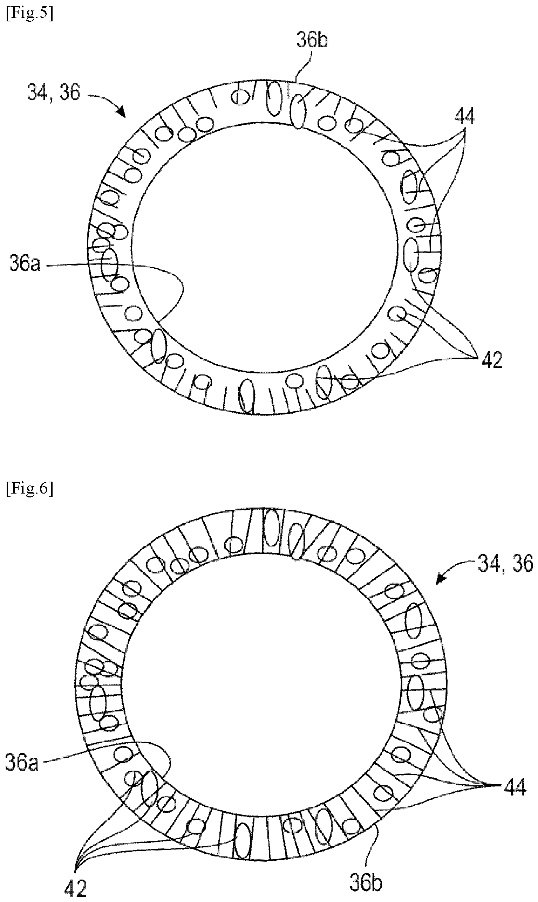

La paroi 36 du tuyau 34 est mieux visible à la figure 5 qui est une vue en coupe du tuyau 34. La paroi 36 a une épaisseur comprise entre 1 et 10mm, de préférence entre 2 et 8mm, et plus préférentiellement entre 3 et 6mm. Le matériau cellulaire a une densité comprise entre 30 et 300kg/m$^3$, de préférence entre 40 et 200kg/m$^3$, et plus préférentiellement entre 50 et 130 kg/m$^3$ (mesurée selon la norme EN ISO 845). Le matériau cellulaire a une élongation à la rupture comprise entre 50 et 300%, de préférence entre 80 et 200%, et plus préférentiellement entre 100 et 150% (mesurée selon la norme EN ISO 1798). Le matériau cellulaire a une résistance à la traction comprise entre 0,2 et 2MPa, de préférence entre 0,4 et 1MPa, et plus préférentiellement entre 0,5 et 0,8MPa (mesurée selon la norme EN ISO 1798).

La paroi 36 comprend des cellules 42 creuses ou vides dont certaines sont ouvertes et d'autres sont fermées. En particulier, les cellules 42 situées à distance des surfaces interne 36a et externe 36b de la paroi 36 sont fermées alors que celles 42 situées et débouchant au niveau des surfaces 36a, 36b sont ouvertes. Les cellules 42 ont une taille comprise entre 1,1 et 3mm, de préférence entre 0,2 et 2mm, et plus préférentiellement entre 0,3 et 1,1mm. Selon l'invention, la paroi 36 comprend en outre des microperforations 44 d'atténuation acoustique.

La paroi 36 peut comprendre au moins une portion 36c comportant des microperforations 44 et au moins une portion 36d, 36e dépourvue de microperforations. Dans l'exemple représenté, la paroi 36 comprend une portion 36c médiane ou intermédiaire comportant des microperforations 44, cette portion étant mieux visible à la figure 4, et des portions d'extrémité 36d, 36e comportant les ouvertures 38, 40 qui sont dépourvues de microperforations.

Selon un premier mode de réalisation du tuyau 34 représenté à la figure 5, les microperforations 44 s'étendent sur une partie seulement de l'épaisseur de la paroi 36, depuis sa surface externe 36b.

Selon un second mode de réalisation du tuyau représenté à la figure 6, les microperforations 44 s'étendent sur toute l'épaisseur de la paroi 36, depuis sa surface externe 36b jusqu'à sa surface interne 36a. On dit alors que les microperforations 44 sont traversantes.

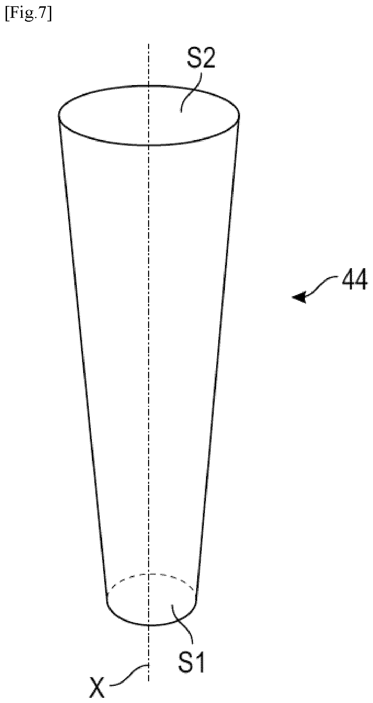

Quel que soit le mode de réalisation adopté, les microperforations 44 ont une forme générale conique ou tronconique avec un évasement vers l'extérieur (ou un rétrécissement vers l'intérieur), comme cela est schématiquement représenté à la figure 7.

Chacune des microperforations 44 s'étend le long d'un axe d'allongement X. Les axes d'allongement X des microperforations 44 peuvent être orientés de manière aléatoire. En variante et de manière préférée, les axes des microperforations sont orientées en direction radiale, c'est-à-dire chacun de manière perpendiculaire à la surface 36b de la paroi 36. Dans encore une autre variante, elles pourraient avoir un certain degré d'inclinaison par rapport à une direction normale à la surface 36b de la paroi 36.

Les microperforations 44 comportent des extrémités radialement internes qui ont une section de passage S1 qui peut être inférieure à celle S2 des extrémités radialement externes des microperforations. Dans le cas où les microperforations sont non traversantes (figure 5), S1 est égal à zéro. Dans le cas où les microperforations sont traversantes, S1 peut être nul ou faible et par exemple inférieure ou égale à 1,5mm$^2$, de préférence inférieure ou égale à 1mm$^2$, et plus préférentiellement inférieure ou égale à 0,5mm$^2$, lorsque le tuyau est à l'état libre sans contrainte.

Les sections de passage S1, S2 des microperforations 44 peuvent être choisies en fonction de la densité du matériau de la paroi 36 et de l'épaisseur de cette paroi. Plus les microperforations 44 sont nombreuses, et plus l'atténuation acoustique est optimisée. Avantageusement, la paroi comprend au moins cinq microperforations par cm$^2$.

Les extrémités radialement externes des microperforations 44 ont par exemple un diamètre compris entre 0,2 et 3mm, de préférence entre 0,3 et 2,5mm, et plus préférentiellement entre 0,5 et 2mm, et encore plus préférentiellement entre 0,8 et 1,2mm.

Les microperforations 44 sont de préférence configurées pour conférer au tuyau une atténuation acoustique d'environ 10dB à des fréquences inférieures à 1000Hz, et par exemple comprises entre 50 et 800Hz ;
La présente invention concerne également un circuit CVC ou HVAC d'un véhicule, comportant au moins un tuyau 34 tel que décrit ci-dessus, par exemple juste en amont d'un grille de ventilation 22, comme illustré à la figure 1.

La présente invention concerne encore un procédé de fabrication d'un tuyau 34 tel que décrit ci-dessus, comprenant les étapes consistant à :

a) réaliser la paroi tubulaire 36 monocouche à partir d'un matériau cellulaire et élastiquement déformable, et
b) réaliser les microperforations 44 dans la paroi 36 par poinçonnage mécanique de la paroi 36 depuis l'extérieur du tuyau 34, ou par perçage laser de la paroi.

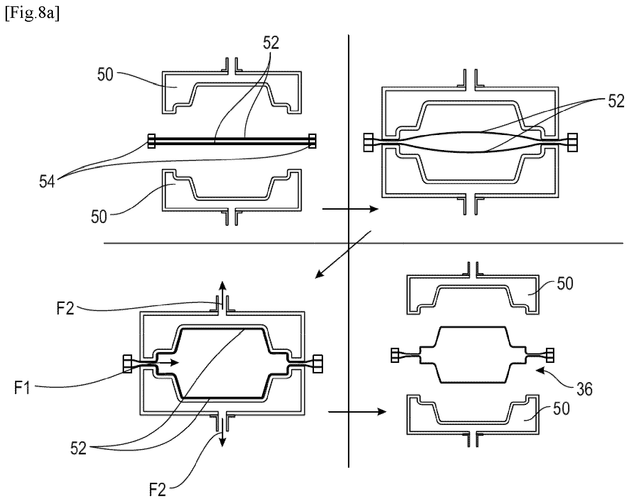

En ce qui concerne la première étape, celle-ci est de préférence mise en oeuvre par les étapes illustrées à la figure 8a. Les étapes de la figure 8a illustrent la fabrication d'une pièce par soufflage dans un moule 50 au moyen de deux feuilles 52. Les deux feuilles 52 forment la matière première. Elles sont superposées et de préférence de même dimensions. Elles peuvent être solidarisées l'une à l'autre le long de deux côtés 54 opposés. Les feuilles 52 sont disposées entre les deux parties d'un moule 50, tel qu'un moule et un contre-moule. Le moule 50 est fermé et les feuilles 52 sont chauffées à l'intérieur du moule pour ramollir leur matériau, de préférence en TPE (étape 1 en haut à gauche à la figure 8a).

De l'air est ensuite insufflé à l'intérieur du moule 50 (flèche F1), entre les feuilles 52, pour les forcer à s'écarter l'une de l'autre et à se plaquer contre les parois du moule 50 (étape 2 en haut à droite à la figure 8a). Les feuilles 52 épousent ainsi l'empreinte du moule 50 et adoptent leur forme définitive ou quasi définitive (étape 3 en bas à gauche à la figure 8a). Le plaquage des feuilles 52 contre les parois du moule 50 peut être facilité en aspirant l'air (flèches F2) et en créant un vide partiel entre les parois du moule 50 et les feuilles 52.

L'injection d'air et/ou l'aspiration d'air est/sont maintenu(s) et le chauffage des feuilles 52 est arrêté de façon à ce que les feuilles refroidissent et se figent dans la nouvelle forme imposée par le moule 50. Le moule 50 est alors ouvert et la pièce ainsi formée peut être retirée (étape 4 en bas à droite à la figure 8a).

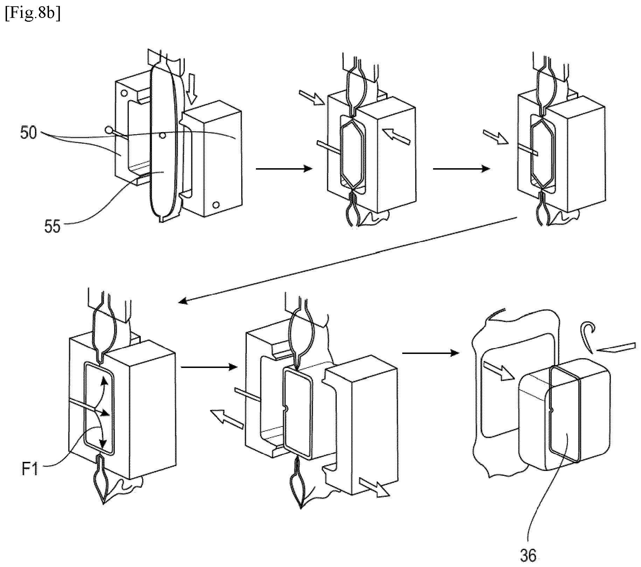

A l'issue de cette étape 4, la pièce obtenue se présente sous la forme d'une préforme qui peut subir des opérations de finition pour obtenir la paroi 36 précitée, telles que des opérations d'ébavurage ou d'usinage par exemple. Dans une variante représentée à la figure 8b, la paroi 36 du tuyau 34 est réalisée par extrusion-soufflage. Cette technique consiste à fabriquer une paraison 55 qui est ensuite positionnée et maintenue dans un moule 50. De l'air est injecté (flèches F1) dans la paraison 55 de façon à ce qu'elle épouse la forme de la cavité interne du moule. Après refroidissement, la préforme obtenue peut subir des opérations de finition comme évoqué dans ce qui précède.

Le matériau de la paraison comprend des cellules qui sont obtenues par injection de gaz au niveau de la vis d'extrusion. Dans le cas d'un tuyau de distribution d'air, le taux d'expansion de la matière varie en théorie de 1,5 fois à 3 fois pour le PE et de 1,5 à 4 fois pour le PP. Ceci conduit à des densités finales comprises entre 200 et 400 kg/m$^3$.

Les cellules obtenues par ce procédé sont fermées et en général de taille plus petite que celles obtenues par l'autre procédé (utilisation de deux feuilles). Intrinsèquement, les tuyaux obtenus par extrusion-soufflage sont plus denses et plus rigides que ceux réalisés par l'autre procédé (moulage de feuilles).

Le tuyau 34 est ensuite réalisé par mise en oeuvre de l'étape b) de poinçonnage mécanique de la paroi 36, pour former le tuyau 34 selon l'invention.

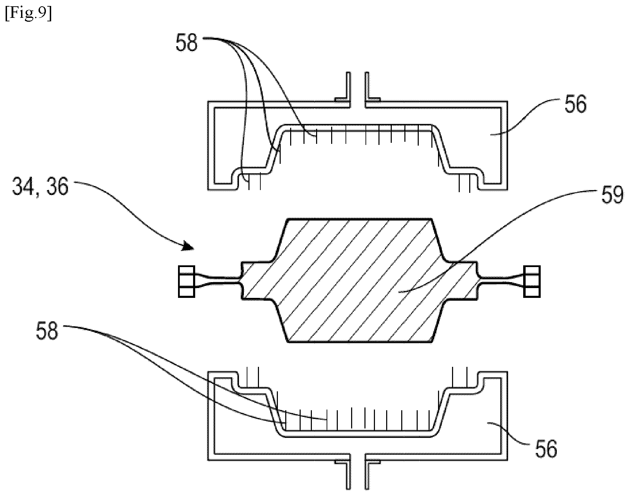

La figure 9 illustre un exemple d'outil 56 de poinçonnage mécanique. La paroi 36 peut être montée entre deux mâchoires de l'outil 56, chacune de ces mâchoires comportant des poinçons 58 configurés pour percer ou transpercer la paroi 36, comme évoqué dans ce qui précède.

Avant le poinçonnage, le tuyau 34 est monté sur et le long d'un support 59 qui a de préférence une forme complémentaire de l'intérieur du tuyau. La paroi 36 du tuyau 34 peut être maintenue fixement sur ce support par aspiration ou fixation mécanique.

Le poinçonnage du tuyau 34 peut être réalisé en une seule fois par déplacement simultanée des mâchoires sur le tuyau, ou bien en deux fois (ou plus lorsqu'il y a plus de deux mâchoires), en déplaçant les mâchoires l'une après l'autre.

Le déplacement des mâchoires et de l'outil peut être réalisé parallèlement à une même direction de façon à ce que les microperforations soient toutes sensiblement parallèles. En variante, au moins certaines microperforations pourraient avoir une orientation différente et le déplacement des mâchoires et de l'outil serait réalisé en fonction de cette orientation.

Le déplacement des mâchoires et de l'outil en général peut être réalisé de manière électromécanique, de manière hydraulique ou de manière automatisée (par un robot par exemple).

Lors du retrait des poinçons 58 de la paroi 36 du tuyau, le matériau du tuyau va se retreindre par retour élastique du fait de ses propriétés élastiques. Les microperforations produites ainsi auront alors des dimensions transversales inférieures à celle des poinçons 58. Les poinçons 58 ont une forme générale en pointe ou d'aiguille dont l'extrémité libre peut être effilée.

Dans une autre variante non représentée, une seule des mâchoires de l'outil pourrait être utilisée pour percer le tuyau et réaliser les microperforations. Cette mâchoire unique pourrait être utilisée pour percer deux côtés opposés du tuyau. Un premier coté du tuyau serait perforé, comme évoqué dans ce qui précède (de l'extérieur vers l'intérieur du tuyau), et la mâchoire serait davantage déplacée vers le tuyau de façon à ce que ses poinçons traversent le tuyau et perforent le côté opposé (de l'intérieur vers l'extérieur).

Dans encore d'autres variantes, les microperforations seraient réalisées par perçage laser, par insertion d'un outil dans le tuyau et déplacement de cet outil depuis l'intérieur vers l'extérieur du tuyau, etc.

Des tests de performance en atténuation acoustique ont été réalisés à la fois sur des tuyaux classiques (non microperforés) et des tuyaux microperforés selon l'invention.

Les tests ont été réalisés conformément à la norme ASTM E2611-09 et à la norme NF EN ISO 7235.

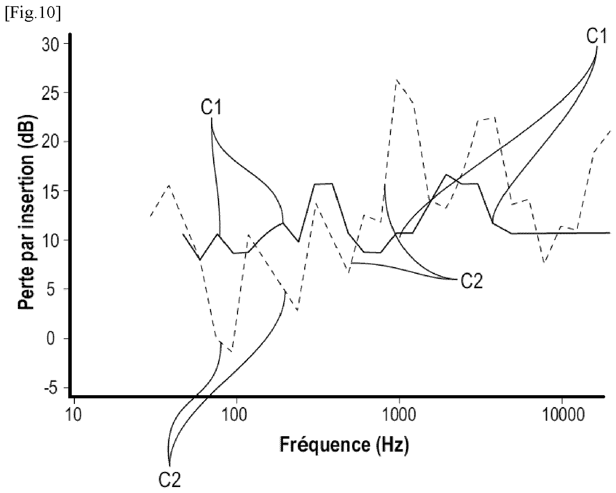

La figure 10 est un graphe montrant l'évolution de l'atténuation acoustique en dB (appelée « perte par insertion » selon la norme précitée) de tuyaux en fonction de la fréquence d'une émission sonore.

D'un point de vue scientifique, l'atténuation est quantifiée par la perte par insertion (*Insertion Loss* = IL en dB) qui est une différence de niveau de bruit constaté en un point (ou zone d'observation) entre deux configurations : une configuration de référence (exemple : circuit avec un tuyau classique), et une configuration de test (circuit avec le tuyau selon l'invention).

La figure 10 montre deux courbes :

- une courbe C1 correspondant à un tuyau idéal et en particulier aux attentes d'un constructeur automobile, et
- une courbe C2 correspondant à un tuyau de la technique antérieure, c'est à dire un tuyau sans microperforation.

Un tuyau présente typiquement un IL significatif de 800 à 10.000Hz. En effet, on constate que, à basses fréquences (50 à 800Hz environ), la courbe C2 est en dessous de la courbe C1, ce qui signifie que l'atténuation acoustique obtenue avec le tuyau ne répond aux attentes du constructeur.

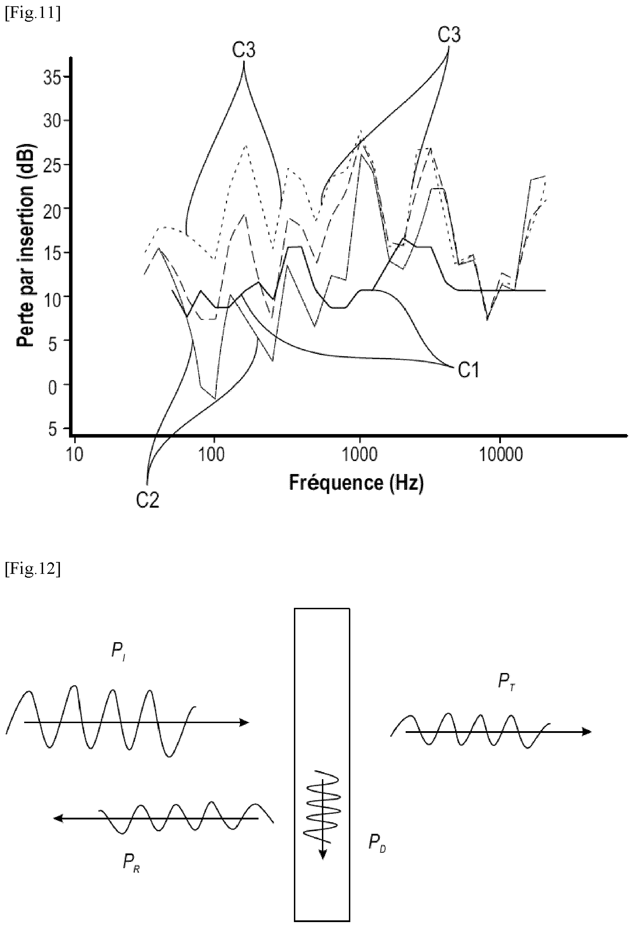

La figure 11 montre, en plus des deux courbes C1 et C2 :

- une courbe C3 correspondant à un tuyau microperforé selon l'invention. La multiperforation de la paroi du tuyau permet des gains supplémentaires de 50 à 800Hz. En effet, on constate que, à basses fréquences (50 à 80Hz environ), la courbe C3 est audessus de la courbe C1, ce qui signifie que l'atténuation acoustique obtenue avec le tuyau est conforme aux attentes du constructeur.

Les propriétés d'atténuation acoustique du tuyau selon l'invention peuvent être expliquées de la façon suivante.

Un tuyau selon l'invention peut être défini comme un silencieux dissipatif qui permet un traitement dissipant l'énergie acoustique dans ou au travers sa paroi.

La dissipation liée à la paroi est quantifiée par son absorption. En considérant l'équilibre de puissance $P^2_I = P^2_R + P^2_D + P^2_T$, le coefficient d'absorption s'écrit :

$$\alpha = 1 - \left(\frac{P_R}{P_I}\right)^2$$

avec $P_R$ et $P_I$ qui sont les amplitudes de pression acoustique (associées aux ondes) réfléchie et incidente (cf. figure 12). $P_D$ et $P_T$ sont les amplitudes de pression acoustique diffusée et transmise.

On estime de manière très approximative l'atténuation acoustique d'un traitement dissipatif par la formule empirique de Piening :

$$\approx 1.5 \frac{P}{S} L \alpha$$

Atténuation en dB (IL par exemple) :
avec P le périmètre traité de la section du conduit (m), S sa section (m2) et L la longueur traitée. La performance dépend donc directement de la surface traitée du conduit avec une absorption significative.

L'absorption d'une paroi peut provenir d'une part dissipée dans l'épaisseur de la paroi mais aussi par simple transparence.

L'absorption d'une paroi cellulaire ou en mousse doit donc être mesurée sur une configuration de test permettant une transmission au travers de la paroi. Le bilan complet (en incidence normale) est mesuré en suivant la méthode de la norme ASTM E2611.

Une étude paramétrique a été conduite permettant de conclure que :

- L'absorption moyenne sur une plage 50-800 Hz est quasiment nulle en absence des multiperforations.
- Les multiperforations permettent d'atteindre des valeurs d'atténuation acoustique proches de 70%, ce qui est considérable.
- L'application de la formule de Piening permet de retrouver l'ordre de grandeur sur la plage 50-800 Hz : atténuation de 9.6 dB pour une configuration particulière de tuyau,
- Les paramètres qui influent sur l'atténuation acoustique sont les dimensions des microperforations et le taux de perforation de la paroi (surface de la section des microperforations sur une surface donnée).
- Idéalement, les extrémités radialement internes des microperforations (44) ont une section de passage (S1) inférieure ou égale à 1,5mm2, de préférence inférieure ou égale à 1mm2, et plus préférentiellement inférieure ou égale à 0,5mm2, lorsque le tuyau (34) est à l'état libre sans contrainte.
- Idéalement, le taux de perforation est au moins de 5%.
- Idéalement, le diamètre des microperforations doit être compris entre 0,2 et 3mm, de préférence entre 0,3 et 2,5mm, plus préférentiellement entre 0,5 et 2mm, et encore plus préférentiellement entre 0,8 et 1,2mm.

▪ L'ASTM E2611 permet un bilan de puissance complet ($T^2$ = puissance transmise, $R^2$ = puissance réfléchie et $D^2$ = puissance dissipée).

▪ L'examen des configurations typiques montre que l'absorption par les microperforations est liée en majeure partie à une dissipation dans l'épaisseur de paroi et dans une plus petite mesure à la transparence.

▪ L'énergie est dissipée par un effet « plaque microperforé » dans les perforations par des pertes viscothermiques de paroi, comme évoqué par certains auteurs scientifiques spécialisés dans le domaine d'atténuation acoustique.

## Revendications

1. Tuyau (34) de distribution d'air pour un circuit CVC d'un véhicule, ce tuyau (34) comportant une unique paroi (36) tubulaire monocouche réalisée à partir d'un matériau cellulaire et élastiquement déformable, **caractérisé en ce que** ladite paroi (36) comprend des microperforations (44) d'atténuation acoustique ces microperforations (44) s'étendant depuis au moins une des surfaces interne (36a) et externe (36b) de la paroi (36) en direction de l'autre de ces surfaces (36a, 36b), voire jusqu'à l'autre de ces surfaces (36a, 36b).

2. Tuyau (34) selon la revendication 1, dans lequel les microperforations (44) s'étendent sur une partie seulement de l'épaisseur de la paroi (36).

3. Tuyau (34) selon la revendication 1, dans lequel les microperforations (44) s'étendent sur toute l'épaisseur de la paroi (36) et débouchent sur les surfaces interne (36a) et externe (36b).

4. Tuyau (34) selon l'une des revendications précédentes, dans lequel les microperforations (44) comportent des extrémités radialement internes qui ont une section de passage (S1) inférieure à celle (S2) des extrémités radialement externes des microperforations (44).

5. Tuyau (34) selon la revendication 4, dans lequel les extrémités radialement internes des microperforations (44) ont chacune une section de passage (S1) inférieure ou égale à 1,5mm$^2$, de préférence inférieure ou égale à 1mm$^2$, et plus préférentiellement inférieure ou égale à 0,5mm$^2$, lorsque le tuyau (34) est à l'état libre sans contrainte.

6. Tuyau (34) selon l'une des revendications précédentes, dans lequel la paroi (36) comprend une portion multiperforée (36c) ayant un taux de perforation supérieur à 5%.

7. Tuyau (34) selon la revendication 4 ou 5, dans lequel les extrémités radialement externes des microperforations (44) ont un diamètre compris entre 0,2 et 3mm, de préférence entre 0,3 et 2,5mm, plus préférentiellement entre 0,5 et 2mm, et encore plus préférentiellement entre 0,8 et 1,2mm.

8. Tuyau (34) selon l'une des revendications précédentes, dans lequel les microperforations (44) sont configurées pour conférer au tuyau (34) une atténuation acoustique comprise entre 5 et 15db, et par exemple de 10dB, à des fréquences inférieures à 1000Hz, et par exemple comprises entre 50 et 800Hz.

9. Tuyau (34) selon l'une des revendications précédentes, dans lequel le matériau cellulaire a une densité comprise entre 30 et 300kg/m$^3$, de préférence entre 40 et 200kg/m$^3$, et plus préférentiellement entre 50 et 130 kg/m$^3$.

10. Tuyau (34) selon l'une des revendications précédentes, dans lequel la paroi (36) comprend au moins cinq microperforations (44) par cm$^2$.

11. Tuyau (34) selon l'une des revendications précédentes, dans lequel les cellules (42) du matériau ont une taille comprise entre 0,1 et 3mm, de préférence entre 0,2 et 2mm, et plus préférentiellement entre 0,3 et 1,1mm.

12. Tuyau (34) selon l'une des revendications précédentes, dans lequel la paroi (36) a une épaisseur comprise entre 1 et 10mm, de préférence entre 2 et 8mm, et plus préférentiellement entre 3 et 6mm.

13. Tuyau (34) selon l'une des revendications précédentes, dans lequel le matériau est à base d'un élastomère thermoplastique.

14. Tuyau (34) selon la revendication précédente, dans lequel le matériau est une polyoléfine, tel que du polyéthylène ou du polypropylène.

15. Tuyau (34) selon l'une des revendications précédentes, dans lequel la paroi (36) comprend au moins une portion (36c) comportant des microperforations (44) et au moins une portion (36d, 36e) dépourvue de microperforations (44).

16. Circuit CVC d'un véhicule, comportant au moins un tuyau (34) selon l'une des revendications précédentes, par exemple juste en amont d'une grille de ventilation (22).

17. Procédé de fabrication d'un tuyau (34) selon l'une des revendications 1 à 15, comprenant les étapes consistant à :

> a) réaliser la paroi (36) tubulaire monocouche à partir d'un matériau cellulaire et élastiquement déformable, et
> b) réaliser les microperforations (44) dans la paroi (36) par poinçonnage mécanique de la paroi (36) ou par perçage laser de la paroi (36).

18. Procédé selon la revendication 17, dans lequel la paroi (36) est réalisée à l'étape a) par :

> a1) disposition de deux feuilles (52) de matériau cellulaire et élastiquement déformable dans un moule (50) de chauffage et de soufflage, les feuilles (52) étant superposées,
> a2) chauffage des feuilles (52) dans le moule (50) et injection d'air entre les feuilles (52) dans le moule (50) de façon à former une préforme tubulaire, et
> a3) réalisation de la paroi tubulaire (36) à partir de la préforme tubulaire.

19. Procédé selon la revendication 17, dans lequel la paroi (36) est réalisée à l'étape a) par :

> A1) extrusion d'une paraison (55) et positionnement de la paraison (55) dans un moule (50),
> A2) injection d'air dans la paraison (55) de façon à former une préforme tubulaire et
> A3) réalisation de la paroi tubulaire (36) à partir de la préforme tubulaire.

**Patentansprüche**

1. Luftverteilungsschlauch (34) für einen HLK-Kreislauf eines Fahrzeugs, wobei dieser Schlauch (34) eine einzige einschichtige rohrförmige Wand (36) aufweist, die aus einem zellulären und elastisch verformbaren Material hergestellt ist, **dadurch gekennzeichnet, dass** die Wand (36) Mikroperforationen (44) zur Schalldämpfung umfasst, wobei sich diese Mikroperforationen (44) von mindestens einer der inneren (36a) und äußeren (36b) Oberfläche der Wand (36) in Richtung der anderen dieser Oberflächen (36a, 36b) oder sogar bis zu der anderen dieser Oberflächen (36a, 36b) erstrecken.

2. Schlauch (34) nach Anspruch 1, wobei sich die Mikroperforationen (44) nur über einen Teil der Dicke der Wand (36) erstrecken.

3. Schlauch (34) nach Anspruch 1, wobei sich die Mikroperforationen (44) über die gesamte Dicke der Wand (36) erstrecken und an der inneren (36a) und der äußeren (36b) Oberfläche münden.

4. Schlauch (34) nach einem der vorstehenden Ansprüche, wobei die Mikroperforationen (44) radial innere Enden aufweisen, die einen kleineren Durchlassquerschnitt (S1) haben als derjenige (52) der radial äußeren Enden der Mikroperforationen (44).

5. Schlauch (34) nach Anspruch 4, wobei die radial inneren Enden der Mikroperforationen (44) jeweils einen Durchlassquerschnitt (S1) von kleiner als oder gleich 1,5mm$^2$, vorzugsweise kleiner als oder gleich 1mm$^2$, und bevorzugter kleiner als oder gleich 0,5mm$^2$ haben, wenn sich der Schlauch (34) in einem freien, spannungsfreien Zustand befindet.

6. Schlauch (34) nach einem der vorstehenden Ansprüche, wobei die Wand (36) einen mehrfach perforierten Abschnitt (36c) umfasst, der eine Perforationsrate von mehr als 5% aufweist.

7. Schlauch (34) nach Anspruch 4 oder 5, wobei die radial äußeren Enden der Mikroperforationen (44) einen Durchmesser zwischen 0,2 und 3mm, vorzugsweise zwischen 0,3 und 2,5mm, bevorzugter zwischen 0,5 und 2mm und noch bevorzugter zwischen 0,8 und 1,2mm aufweisen.

8. Schlauch (34) nach einem der vorstehenden Ansprüche, wobei die Mikroperforationen (44) so ausgestaltet sind, dass sie dem Schlauch (34) eine Schalldämpfung zwischen 5 und 15db und zum Beispiel 10dB bei Frequenzen unter 1000Hz und zum Beispiel zwischen 50 und 800Hz verleihen.

9. Schlauch (34) nach einem der vorstehenden Ansprüche, wobei das zelluläre Material eine Dichte zwischen 30 und 300kg/m$^3$, vorzugsweise zwischen 40 und 200kg/m$^3$, und bevorzugter zwischen 50 und 130kg/m$^3$ aufweist.

10. Schlauch (34) nach einem der vorstehenden Ansprüche, wobei die Wand (36) mindestens fünf Mikroperforationen (44) pro cm$^2$ umfasst.

11. Schlauch (34) nach einem der vorstehenden Ansprüche, wobei die Zellen (42) des Materials eine Größe zwischen 0,1 und 3mm, vorzugsweise zwischen 0,2 und 2mm und bevorzugter zwischen 0,3 und 1,1mm aufweisen.

12. Schlauch (34) nach einem der vorstehenden Ansprüche, wobei die Wand (36) eine Dicke zwischen 1 und 10mm, vorzugsweise zwischen 2 und 8mm und bevorzugter zwischen 3 und 6mm aufweist.

13. Schlauch (34) nach einem der vorstehenden Ansprüche, wobei das Material auf einem thermoplastischen Elastomer basiert.

**14.** Schlauch (34) nach dem vorstehenden Anspruch, wobei das Material ein Polyolefin ist, wie Polyethylen oder Polypropylen.

**15.** Schlauch (34) nach einem der vorstehenden Ansprüche, wobei die Wand (36) mindestens einen Abschnitt (36c) umfasst, der Mikroperforationen (44) aufweist, und mindestens einen Abschnitt (36d, 36e), der frei von Mikroperforationen (44) ist.

**16.** HLK-Kreislauf eines Fahrzeugs, der mindestens einen Schlauch (34) nach einem der vorstehenden Ansprüche aufweist, zum Beispiel stromaufwärts von einem Lüftungsgitter (22).

**17.** Verfahren zur Herstellung eines Schlauchs (34) nach einem der Ansprüche 1 bis 15, umfassend die Schritte, bestehen aus dem:

> a) Herstellen der einschichtigen rohrförmigen Wand (36) aus einem zellulären und elastisch verformbaren Material, und
> b) Herstellen der Mikroperforationen (44) in der Wand (36) durch mechanisches Stanzen der Wand (36) oder durch Laserbohren der Wand (36).

**18.** Verfahren nach Anspruch 17, wobei die Wand (36) in Schritt a) hergestellt wird durch:

> a1) Anordnung von zwei Lagen (52) aus zellulärem und elastisch verformbarem Material in einer Heiz- und Blasform (50), wobei die Lagen (52) übereinander angeordnet sind,
> a2) Erhitzen der Lagen (52) in der Form (50) und Injizieren von Luft zwischen den Lagen (52) in der Form (50), um eine rohrförmige Vorform zu bilden, und
> a3) Herstellung der rohrförmigen Wand (36) aus der rohrförmigen Vorform.

**19.** Verfahren nach Anspruch 17, wobei die Wand (36) in Schritt a) hergestellt wird durch:

> A1) Extrusion eines Vorformlings (55) und Positionierung des Vorformlings (55) in einer Form (50),
> A2) Injektion von Luft in den Vorformling (55), um eine rohrförmige Vorform zu bilden, und
> A3) Herstellung der rohrförmigen Wand (36) aus der rohrförmigen Vorform.

**Claims**

**1.** An air distribution pipe (34) for a HVAC circuit of a vehicle, this pipe (34) comprising a single tubular one-layered wall (36) which is produced from a resiliently deformable cellular material, **characterised in that** said wall (36) comprises sound attenuation microperforations (44), these microperforations (44) extending from at least one of the internal (36a) and external (36b) surfaces of the wall (36) in the direction of the other of these surfaces (36a, 36b), or as far as the other of these surfaces (36a, 36b).

**2.** The pipe (34) of claim 1, wherein the microperforations (44) extend through only one portion of the thickness of the wall (36).

**3.** The pipe (34) according to claim 1, wherein the microperforations (44) extend through the entire thickness of the wall (36) and open onto the internal (36a) and external (36b) surfaces.

**4.** The pipe (34) according to one of the preceding claims, in which the microperforations (44) comprise radially internal ends which have a smaller passage cross-section (S1) than that (52) of the radially external ends of the microperforations (44).

**5.** The pipe (34) according to claim 4, wherein the radially internal ends of the microperforations (44) each have a passage cross-section (S1) of less than or equal to 1.5mm$^2$, preferably less than or equal to 1mm$^2$, and more preferably less than or equal to 0.5mm$^2$, when the pipe (34) is in the free unstressed state.

**6.** The pipe (34) according to any of the preceding claims, wherein the wall (36) comprises a microperforated segment (36c) having a perforation rate greater than 2%, and preferably greater than 5%.

**7.** The pipe (34) according to claim 4 or 5, wherein the radially external ends of the microperforations (44) have a diameter of between 0.2 and 3mm, preferably between 0.3 and 2.5mm, more preferably between 0.5 and 2mm, and even more preferably between 0.8 and 1.2mm.

**8.** The pipe (34) according to any of the preceding claims, wherein the microperforations (44) are configured to confer the pipe (34) with an sound attenuation of between 3 and 15db, and for example 10dB, at frequencies below 1000Hz, and for example between 50 and 800Hz.

**9.** The pipe (34) according to any of the preceding claims, wherein the cellular material has a density of between 30 and 300kg/m3, preferably between 40 and 200kg/m3, and more preferably between 50 and 130kg/m3.

**10.** The pipe (34) according to any of the preceding claims, wherein the wall (36) comprises at least five

microperforations (44) per $cm^2$.

11. The pipe (34) according to any of the preceding claims, wherein the cells (42) of the material have a size between 0.1 and 3mm, preferably between 0.2 and 2mm, and more preferably between 0.3 and 1.1mm.

12. The pipe (34) according to any of the preceding claims, wherein the wall (36) has a thickness between 1 and 10mm, preferably between 2 and 8mm, and more preferably between 3 and 6mm.

13. The pipe (34) according to any of the preceding claims, wherein the material is based on a thermoplastic elastomer.

14. The pipe (34) according to the preceding claim, wherein the material is a polyolefin, such as polyethylene or polypropylene.

15. The pipe (34) according to any of the preceding claims, wherein the wall (36) comprises at least one segment (36c) comprising microperforations (44) and at least one segment (36d, 36e) free of microperforations (44).

16. A HVAC circuit of a vehicle, comprising at least one pipe (34) according to one of the preceding claims, for example just upstream of a ventilation grille (22).

17. A method for manufacturing a pipe (34) according to any of claims 1 to 15, comprising the steps of:

a) producing the tubular one-layered wall (36) from a resiliently deformable cellular material, and
b) producing the microperforations (44) in the wall (36) by mechanical punching the wall (36) or by laser piercing the wall (36).

18. The method according to claim 17, wherein the wall (36) is produced in the step a) by:

a1) arranging two sheets (52) of resiliently deformable cellular material in a heating and blowing mould (50), the sheets (41) being superimposed,
a2) heating the sheets (52) in the mould (50) and injecting air between the sheets (52) in the mould (50) so as to form a tubular preform, and
a3) producing the tubular wall (36) from the tubular preform.

19. The method according to claim 17, wherein the wall (36) is produced in the step a) by:

A1) extruding a parison (55) and positioning the parison in a mould (50),
A2) injecting air into the parison (55) so as to form a tubular preform, and
A3) producing the tubular wall (36) from the tubular preform.

[Fig.1]

[Fig.2]

[Fig.3]

34

40

36e

36c

36

36d

38

[Fig.4]

[Fig.5]

[Fig.6]

[Fig.7]

[Fig.8a]

[Fig.8b]

EP 3 922 494 B1

[Fig.9]

58

56

34, 36

59

58

56

19

[Fig.10]

[Fig.11]

[Fig.12]

**EP 3 922 494 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- JP 2004116959 A
- WO 2008000788 A1
- DE 3536379 A1
- FR 2876172 A1